Europäisches Patentamt

(19) European Patent Office

Office européen des brevets

(11) Publication number: **0 262 225**
**A1**

## (12) EUROPEAN PATENT APPLICATION

published in accordance with Art. 158(3) EPC

(21) Application number: 86904460.2

(22) Date of filing: 26.03.86

Data of the international application taken as a basis:

(86) International application number:
PCT/SU86/00025

(87) International publication number:
WO87/05843 (08.10.87 87/22)

(51) Int. Cl.³: **B 23 K 26/08**

(43) Date of publication of application:
06.04.88 Bulletin 88/14

(84) Designated Contracting States:
CH DE FR GB IT LI SE

(71) Applicant: **NAUCHNO-ISSLEDOVATELSKY TSENTR PO TEKHNOLOGICHESKIM LAZERAM AKADEMII NAUK SSSR**
**Glavpochtambt, sortirovka-NITSTL**
**Moskovskaya obl. Shatura, 140700(SU)**

(72) Inventor: **MAIOROV, Vladimir Sergeevich**
**Dokuchaev per., 15-42**
**Moscow, 107053(SU)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) INSTALLATION FOR LASER TREATMENT OF MATERIALS.

㊗ Die Erfindung bezieht sich auf die Lasertechnik.

Die zur Laserstrahlbearbeitung von Werkstoffen bestimmte lage enthält einen Laser (1), einen Koordinatentisch mit einem darauf angeordneten zu bearbeitenden Werkstoff (3) und ein im Laserstrahlengang liegendes System (4) zur Umlenkung, Umformung und Fokussierung der Laserstrahlung mit einem Austrittstubus (6). Die Anlage ist auch mit einem System (8) zur numerischen Steuerung versehen, welches mit dem Laser (1) und dem Koordinatentisch (2) verbunden ist. Das System (4) zur Umlenkung, Umformung und Fokussierung der Laserstrahlung enthält eine optische Spiegeleinheit (9) mit einem eigenen Antrieb (10), der ihre Drehung um die eigene Achse (16) bewirkt und mit dem System (8) zur numerischen Steuerung verbunden ist.

Die Anlage ist durch erweiterte Universalität und viele technologische Möglichkeiten gekennzeichnet. Mit der Anlage können die Laserstrahl-Härtung, Schweißung, Legierung, das Schneiden u.a.m. an Werkstücken von komplizierter Konfiguration effektiv durchgeführt werden.

FIG.1

EP 0 262 225 A1

0262225

## ANLAGE ZUR LASERSTRAHLBEARBEITUNG VON WERKSTOFFEN
### Gebiet der Technik

Die zum Patent angemeldete Erfindung bezieht sich auf die Lasertechnik, insbesondere auf Anlagen zur Laserstrahlbearbeitung von aus verschiedenen Werkstoffen bestehenden Bauteilen und Baugruppen verschiedener Konfiguration.

Die zum Patent angemeldete Anlage zur Laserstrahlbearbeitung von Werkstoffen kann in verschiedenen Gebieten des Maschinenbaus wie Werkzeugmaschinenbau, Kraftfahrzeugbau, Bau von landwirtschaftlichen Maschinen, Flugzeugbau, Schiffbau usw. zur Wärmebehandlung mit dem Laserstrahl, zum Legieren, Aufschmelzen, Schweißen, Schneiden u.a.m. verwendet werden.

### Stand der Technik

Zur Zeit ist eine Reihe von Anlagen zur Laserstrahlbearbeitung von Werkstoffen bekannt, die zur Durchführung von verschiedenen technologischen Vorgängen in der Industrie wie thermische Verfastigung, Legierung, Schweißung, Schneiden und anderen Operationen an Werkstücken verschiedener Abmessungen, Konfiguration und Werkstoffzusammensetzung bestimmt sind.

Nach der FR-PS Nr. 2492703, Kl.B 23 K 26/08 oder nach dem ähnlichen britischen Patent Nr.2088267, Kl.B 23 K 26/08 ist z.B. eine Anlage zur Laserstrahlbearbeitung von Werkstoffen bekannt, die zum Schneiden von Blechwerkstoffen mit dem Laserstrahl bestimmt ist. Die Anlage enthält einen Laser, einen Koordinatentisch zur Anordnung des zu bearbeitenden Werkstoffes und ein mit dem Austrittstubus versehenes System zur Umlenkung, Umformung und Fokussierung des Laserstrahls. Die Anlage besitzt auch ein System zur numerischen Steuerung, das mit dem Laser und dem Koordinatentisch verbunden ist.

Der Laserstrahl wird mittels einer im System zur Umlenkung, Umformung und Fokussierung der Laserstrahlung vorgesehenen Linse fokussiert und durch den Austrittstubus mit einer Düse von kleinem Durchmesser auf den zu bearbeitenden Werkstoff gerichtet. Durch die Düse des Austrittstubus wird gleichzeitig mit dem Laserstrahl Gas zum Schneiden zugeführt. Der Blechwerkstoff wird auf dem Koordinatentisch befestigt, dessen Antrieb vom System zur numerischen Steuerung gesteuert wird, und wird nach einer festgelegten Bewegungsbahn verschoben, wobei er mit dem Laserstrahl geschnitten wird.

Die Beschränktheit der Anwendung solcher und ähnlicher Anlagen besteht darin, daß sie nur das Konturenschneiden und nur bei Verwendung von Blechmaterial ermöglichen.

In der Anlage zur Laserstrahlbearbeitung von Werkstoffen nach dem BRD-Patent Nr. LE 3217226, Kl. B 23 K 26/06 enthält das System zur Umlenkung, Umformung und Fokussierung der Laserstrahlung ein mit einem Drehantrieb verbundenes Gehäuse, dessen Drehachse mit der Lalerstrahlachse zusammenfällt, sowie drei Spiegel, die im Gehäuse so angeordnet sind, daß die Normalen zu ihren Oberflächen in einer Ebene mit der Drehachse des Gehäuses liegen, wobei die Normale zur Oberfläche des zweiten Spiegels senkrecht zur Drehachse des Gehäuses steht, während die Normalen zu Oberflächen des ersten und des dritten Spiegels spitze Winkel mit der Normale zur Oberfläche des zweiten Spiegels bilden, wobei außerhalb des Gehäuses ein vierter und ein fünfter Spiegel angeordnet sind, die mit Einrichtungen zur Laserstrahlablenkung in aufeinander senkrechtstehenden Ebenen verbunden sind.

Beim Betrieb des Antriebs und beim Drehen des Gehäuses wird der aus dem Gehäuse austretende Laserstrahl auch um seine Achse gedreht. Das gibt die Möglichkeit, die Ungleichmäßigkeit seiner Modenstruktur zu mitteln und ein ausreichend gleichmäßiges achsensymmetrisches Laserstrahlungsbündel zu erhalten. Weiter bildet dieses Bündel auf dem zu bearbeitenden Werkstoff mit Hilfe der Ablenkvorrichtungen des vierten und des fünften Spiegels ein gleichmäßig erhitztes Gebiet, dessen Form annähernd rechteckig ist.

0262225

Diese Anlage enthält viel optische Elemente und hat deswegen einen komplizierten Aufbau. Sie gibt keine Möglichkeit, eine Vielzahl der vom Laserstrahl erzeugten Wärmeflächen verschiedener Konfiguration auf der Oberfläche des zu bearbeitenden Werkstoffes zu bilden. In der Anlage sind fixierte Ablenkebenen vorgesehen und besteht keine Möglichkeit, die Winkellage der Wärmefläche auf dem zu bearbeitenden Werkstoff zu ändern. Somit sind die Vielseitigkeit und die Betriebsmöglichkeiten der Anlage begrenzt.

Eine in der FR-PS Nr.2537029, Kl. B 23 K 26/04 beschriebene Anlage zur Laserstrahlbearbeitung von Werkstoffen enthält einen Laser, einen Koordinatentisch für den zu bearbeitenden Werkstoff, ein im Strahlengang des Lasers liegendes System zur Umlenkung, Umformung und Fokussierung der Laserstrahlung mit einem Austrittstubus und besitzt außerdem ein mit dem Laser und dem Koordinatentisch verbundenes System zur numerischen Steuerung, wobei der Koordinatentisch als Industrieroboter ausgeführt ist und sich auf einem Träger drehen kann, während das mit dem Austrittstubus versehene System zur Umlenkung, Umformung und Fokussierung der Laserstrahlung als drehbarer Arbeitskopf mit einer Vorrichtung zur Laserstrahlfokussierung und mit einem gelenkig verbundenen Strahlspiegelleiter zur Umlenkung der Laserstrahlung aufgebaut ist.

Beim Betrieb der Anlage verschiebt der Industrieroboter den Arbeitskopf mit dem gelenkigen Strahlspiegelleiter entsprechend einem im System zur numerischen Steuerung vorgegebenen Programm, wobei das Schneiden mit dem Laserstrahl oder das Schweißen eines unbeweglichen Werkstoffes nach einer komplizierten räumlichen Bewegungsbahn erfolgen können.

Infolge beschränkter Anzahl und Artverschiedenheit von ausführbaren technologischen Operationen ist aber die Anlage nicht universal anwendbar, da in ihr ein Arbeitskopf von unveränderlicher Konfiguration benutzt wird und die Struktur der auf den Werkstoff einfallenden Laserstrahlung während des Arbeitszyklus in folgedessen nicht modifiziert und geändert werden kann.

Offenbarung der Erfindung

Der Erfindung liegt die Aufgabe zugrunde, eine Anlage zur Laserstrahlbearbeitung von Werkstoffen zu entwickeln, die durch zusätzliche Freiheitsgrade des Systems zur Umlenkung, Umformung und Fokussierung der Laserstrahlung ihre vielseitigere Anwendbarkeit und erweiterte technologische Möglichkeiten gewährleistet.

Diese Aufgabe wird mit der Anlage zur Laserstrahlbearbeitung von Werkstoffen gelöst, die einen Laser, einen Koordinatentisch für die Anodnung des zu bearbeitenden Werkstoffes, ein im Laserstrahlengang liegendes System zur Umlenkung, Umformung und Fokussierung der Laserstrahlung mit einem Austrittstubus enthält sowie mit einem an den Laser und den Koordinatentisch angeschlossenen System zur numerischen Steuerung versehen ist und deren System zur Umlenkung, Umformung und Fokussierung der Laserstrahlung erfindungsgemäß eine optische Spiegeleinheit enthält, die mit ihrem eigenen Antrieb ausgestattet ist, welcher ihre Drehung um ihre eigene Achse ermöglicht und mit dem System zur numerischen Steuerung verbunden ist.

Dadurch werden die technologischen Möglichkeiten der Anlage erewitert und die Qualität, die Stabilität sowie die Beständigkeit der Laserstrahlbearbeitung verschiedener Werkstoffe und Werkstücke unterschiedlicher Konfiguration gewährleistet.

Die optische Spiegeleinheit der zum Patent angemeldeten Anlage kann in Form eines Spiegels ausgeführt werden, der mit einer Justiereinrichtung verbunden wird.

Bei solcher Ausführung der optischen Spiegeleinheit kann der zu behandelnde Werkstoff auf spezielle Weise mit konstanter Qualität nach komplizierten Be-

0262225

wegungsbahnen bearbeitet werden.

Es ist zweckmäßig, die optische Spiegeleinheit der zum Patent angemeldeten Anlage in der Art eines Spiegels auszuführen, der mit einer Ablenkeinrichtung versehen ist.

Dadurch wird es möglich, einen hochwertigen konstanten Betriebsverlauf der Laserstrahlbearbeitung mit Ablenkung auf beliebigen Zonen des zu bearbeitenden Werkstoffes zu realisieren.

In der zum Patent angemeldeten Anlage ist es in mehreren Fällen von Nutzen, die Achse des Spiegels der optischen Spiegeleinheit unter einem Winkel zur eigenen Drehachse der optischen Spiegeleinheit zu richten.

Dies gibt die Möglichkeit, die Laserstrahlbearbeitung von kleineren ringförmigen Zonen auf Werkstücken mit guter Qualität durchzuführen oder die Laserstrahlbearbeitung mit kreisförmiger Ablenkung zu verwirklichen.

In der anzumelden den Anlage kann man den Austrittstubus des Systems zur Umlenkung, Umformung und Fokussierung der Laserstrahlung mit einem unter einem Winkel zur Laserstrahlrichtung eingebauten Spiegel versehen und den Austrittstubus mit dem Antrieb der optischen Spiegeleinheit verbinden, der die Möglichkeit der Drehbewegung des Austrittstubus um eine Achse gewährleistet, die mit der Achse der Laserstrahlung zusammenfällt.

Dadurch wird die Möglichkeit gegeben, die Seitenflächen von Öffnungen mit konstanter hoher Qualität zu bearbeiten und dabei den optimalen Betriebsverlauf der Laserstrahlbearbeitung beizubehalten.

Kurze Beschreibung der Zeichnungen

Der Aufbau der zum Patent angemeldeten Anlage zur Laserstrahlbearbeitung von Werkstoffen wird im folgenden an konkreten Beispielen ihrer Ausführung und anhand der beigefügten Zeichnungen näher erläutert. Es zeigen

Fig.1 eine schematische Darstellung der Gesamtansicht der Anlage zur Laserstrahlbearbeitung von Werkstoffen gemäß der Erfindung;

Fig.2 eine schematische Darstelleung eines Teils der Anlage zur Laserstrahlbearbeitung von Werkstoffen nach Fig.1 gemäß der Erfindung mit einer optischen Spiegeleinheit in der Art eines Spiegels, der mit einer Justiereinrichtung verbunden ist;

Fig.3 eine schematische Darstellung eines Teils der Anlage zur Laserstrahlbearbeitung von Werkstoffen nach Fig.1 und 2 gemäß der Erfindung mit einer optischen Spiegeleinheit in der eines Spiegels, der mit einer Ablenkeinrichtung versehen ist;

Fig.4 eine Veranschaulichung von Besonderheiten der Anlage zur Laserstrahlbearbeitung von Werkstoffen nach Fig.1 gemäß der Erfindung bei Verlagerung der Achse des Spiegels in der optischen Spiegeleinheit um einen kleinen Winkel in Bezug auf die Drehachse der optischen Spiegeleinheit.

Fig.5 eine schematische Darstellung der in Fig.1 gezeigten Anlage zur Laserstrahlbearbeitung von Werkstoffen gemäß der Erfindung, die für die Bearbeitung von Öffnungen modifiziert ist.

Bevorzugte Ausführungsvariante der Erfindung

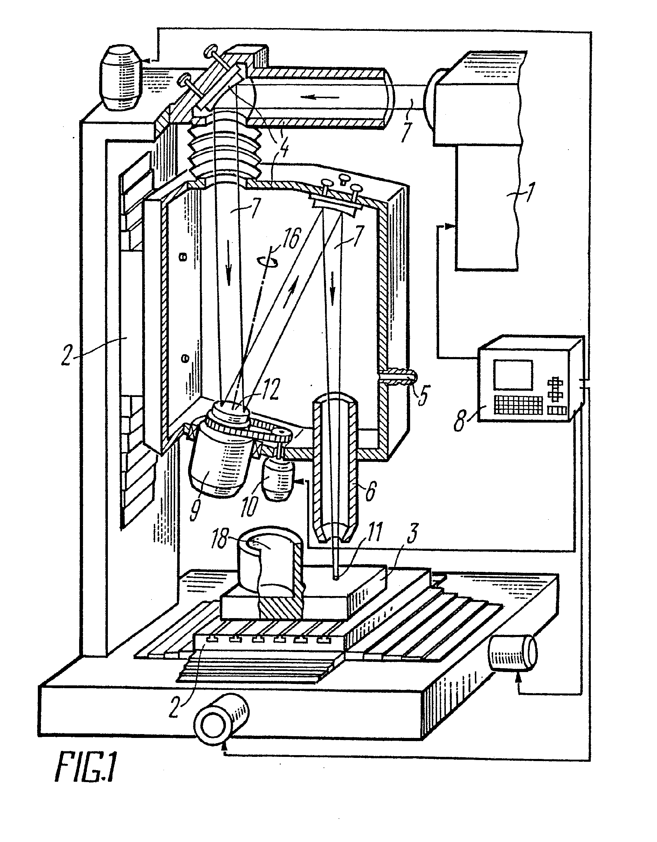

Die zum Patent angemeldete Anlage zur Laserstrahlbearbeitung von Werkstoffen enthält einen Laser 1 (Fig.1), einen Koordinatentisch 2 mit einem darauf angeordneten Werkstoff 3, ein System 4 zur Umlenkung, Umformung und Fokussierung der Laserstrahlung mit einem Stutzen 5 zur Gaszuführung und einem Austrittstubus 6, welches im Gang des Laserstrahls 7 liegt, sowie ein mit dem Laser 1 und dem Koordinatentisch 2 verbundenes System 8 zur numerischen Steuerung. Das zur Umlenkung, Umformung und Fokussierung der Laserstrahlung vorgesehene System 4 enthält eine in einem Lager befestigte optische Spiegeleinheit 9, die mit ihrem eigenen mit dem System 8 zur numerischen Steuerung verbundenen Antrieb 10 ausgestattet ist.

Bei abgeschaltetem Antrieb 10 arbeitet die Anlage in herkömmlicher Weise mit unveränderlicher Konfiguration des Systems 4 zur Umlenkung, Umformung und Fokussierung der Laserstrahlung. Der fokussierte Laserstrahl 7 fällt auf den zu bearbeitenden Werkstoff 3 ein und wird darauf nach einem ins System 8 zur numerischen Steuerung eingegebenen Programm infolge der Bewegung des Koordinatentisches 2 verschoben.

In der optischen Spiegeleinheit 9 kann der Spiegel im allgemeinen nichtisotrop sein und auf irgend eine Weise durch in Fig.1 nicht gezeigte und zur optischen Spiegeleinheit 9 gehörende Systeme bewegt werden, wodurch die Struktur des Laserstrahls 7 umgeformt und seine Fortpflanzungsrichtung verschoben wird. In diesem Falle wird die erforderliche Orientierung des ungleichmäßigen und nichtsymmetrischen Wärmefleks auf dem zu bearbeitenden Werkstoff 3 bezüglich der Bewegungsbahn des Laserstrahls 7 auf dem Werkstoff 3 vermittels der Arbeit des Antriebs 10 nach einem im System 8 zur numerischen Steuerung eingegebenen oder nach vorgegebenen Algorithmen berechneten Programm sowie durch die Bewegung des Koordinatentisches 2 erreicht. Diese Betriebsart ermöglicht es, auf der Oberfläche des zu bearbeitenden Werkstoffes 3 eine für den Vorgang der Laserstrahlbearbeitung optimale ungleichmäßige Wärmefläche 11 zu bilden und ihre richtige räumliche Lage an allen Stellen der Bearbeitungszone zu gewährleisten. Dadurch erreicht man die erforderliche Qualität, Stabilität und Beständigkeit der Laserstrahlbearbeitung von verschiedenen Werkstoffen und Werkstücken unterschiedlicher Konfiguration und werden die Universalität sowie die technologischen Möglichkeiten der Anlage erweitert.

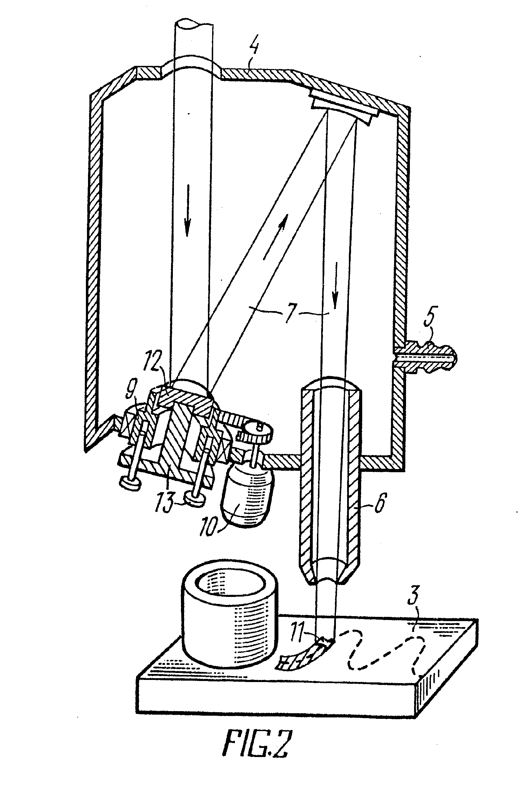

Die optische Spiegeleinheit 9 (Fig.2) kann in der Art eines Spiegels 12 ausgeführt werden, der mit einer Justiereinrichtung 13 verbunden wird. Die Reflexions-

0262225

fläche des Spiegels 12 kann verschieden sein. Sie kann nicht nur eben oder sphärisch, sondern auch elliptisch, zylindrisch, mit Mosaik, mit Raumbeugungsgitter und als andere nichtisotrope Oberfläche ausgeführt werden, um die erforderliche Struktur des Laserstrahls 7 auf der Oberfläche des zu bearbeitenden Werkstoffes 3 zu erhalten. Die Justiereinrichtung 13 gestattet es, den Spiegel 12 in der geforderten Lage zu fixieren und, wenn nötig, diese Lage zu ändern.

Beim Betrieb der in Fig.1 gezeigten Anlage mit der optischen Spiegeleinheit 9 nach Fig.2 garantiert das numerische Programmsteuerungssystem 8 mittels des Antriebs 10 die erforderliche Orientierung der von der Laserstrahlung 7 auf dem zu bearbeitenden Werkstoff 3 erzeugten Wärmefläche. Dadurch wird die ständig hohe Qualität und die Gleichmäßigkeit der Laserstrahlbearbeitung bei jeder beliebig komplizierten Bearbeitungsbahn gewährleistet.

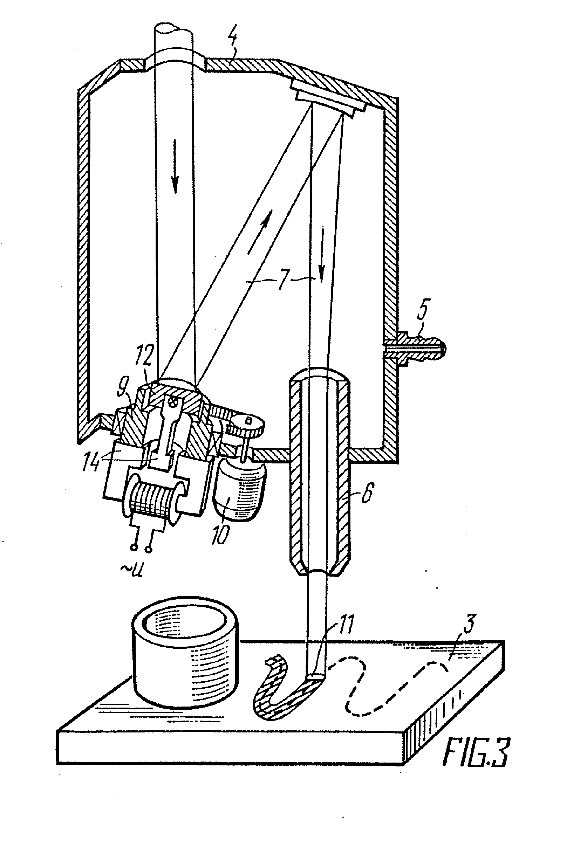

Die optische Spiegeleinheit 9 (Fig.3) kann in der Art eines Spiegels 12 mit einer Ablenkeinrichtung 14 ausgeführt werden.

Das System 8 zur numerischen Steuerung führt der Ablenkeinrichtung 14 die Speisespannung zu und setzt sie in Betrieb, wobei der Laserstrahl 7 infolge von Schwingungen des Spiegels 12 in der Bearbeitungszone auf der Oberfläche des zu bearbeitenden Werkstoffes 3 Schwingungen mit einer Frequenz von mehreren Hundert Hertz vollführt und eine in der Ablenkebene ausgedehnte gleichmäßige Wärmefläche 11 erzeugt. Das numerische Steuerungssystem 8 berechnet fortwährend die Richtung des Bewegungsvektors. Wenn die Bearbeitungsbahn auf dem zu behandelnden Werkstoff 3 bei Bewegung des Koordinatentisches 2 krummlinig ist, dreht das numerische Steuerungssystem 8 die optische Spiegeleinheit 9 mittels ihres Antriebs 10 so, daß der Winkel zwischen der Ablenkebene und der Bearbeitungsbahn in jedem Zeitpunkt konstant bleibt. Eben dadurch wird eine hohe Qualität der Laserstrahlbearbeitung mit Ablenkung für beliebige Zonen des zu bearbeitenden Werkstoffes erreicht.

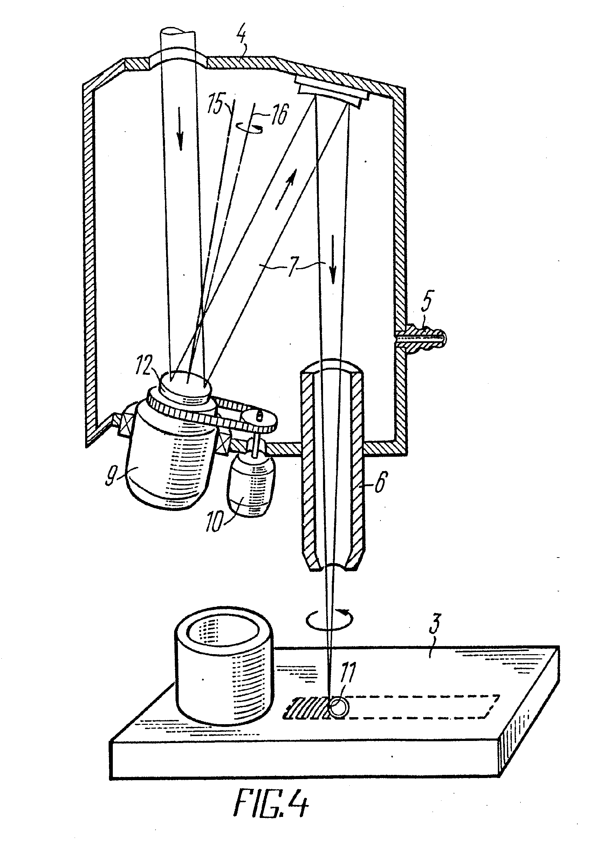

Die Achse 15 (Fig.4) des Spiegels 12 der optischen Spiegeleinheit 9 kann unter einem Winkel zur eigenen Drehachse 16 der optischen Spiegeleinheit 9 gerichtet sein.

Beim Drehen der optischen Spiegeleinheit 9 mit Hilfe des Antriebs 10 umschreibt der Laserstrahl 7 einen Kreis auf der Oberfläche des zu bearbeitenden Werkstoffes 3. Dadurch wird es erstens möglich, die Laserstrahlbearbeitung nach einer kreisförmigen Bahn von nicht zu großem Durchmesser durchzuführen, was in mehreren Fällen bequemer ist, als die Kreisbewegung des Koordinatentisches 2 zu benutzen. Wenn zweitens der Antrieb 10 die Drehung der optischen Spiegeleinheit 9 mit einer Geschwindigkeit von mindestens mehreren zehn Umdr/sec bewirkt, so bildet der einen kleinen Kreis umlaufende Laserstrahl 7 auf der Oberfläche des zu bearbeitenden Werkstoffes 3 eine gleichmäßige achsensymmetrische Wärmefläche 11, was bei einigen Arten der Laserstrahlbearbeitung ebenfalls sehr nützlich ist, wenn eine solche Wärmefläche 11 auf dem zu bearbeitenden Werkstoff 3 nach einer im numerischen Steuerungssystem 8 vorgegebenen Bahn bewegt wird.

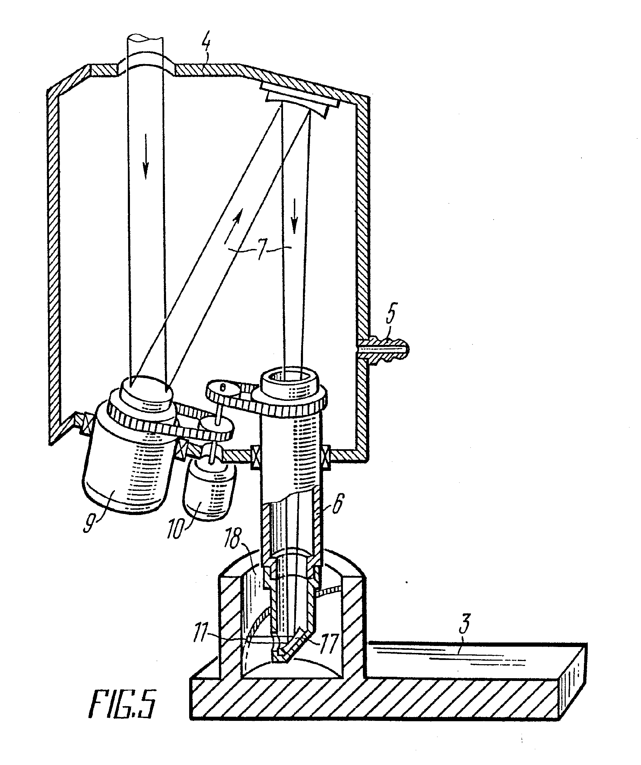

Der Austrittstubus (Fig.5) des Systems 4 zur Umlenkung, Umformung und Fokussierung der Laserstrahlung kann drehbar um eine Achse eingebaut sein, die mit der Achse des Laserstrahls 7 zusammenfällt, wobei der Austrittstubus 6 mit einem unter einem Winkel zur Richtung des Laserstrahls 7 angeordneten Spiegel 17 versehen und mit dem Antrieb 10 der optischen Spiegeleinheit 9 verbunden wird.

Der mit dem Spiegel 17 ausgestattete Austrittstubus 6 wird in das Innere einer Öffnung 18 in dem zu bearbeitenden Werkstoff eingeführt, und der Laserstrahl 7 wird auf die Seitenwand der Öffnung 18 gerichtet. Das numerische Steuerungssystem 8 steuert dabei den Bearbeitungsvorgang so, daß durch Verschiebung des Koordinatentisches 2, die fortschreitende Bewegung des Fokussierkopfes mit dem Austrittstubus 6 des Systems 4 zur Umlenkung, Umformung und Fokussierung der Laserstrahlung und durch Drehung des Austrittstubus 6 die erforderliche Laserstrahl-Bearbeitungsbahn verfolgt wird. Durch Einwirkung des gemeinsamen Antriebs 10 dreht sich synchron mit der Drehung des Austrittstubus 6 auch die optische Spiegeleinheit 9. Wenn dabei die Laserstrahl-Bearbeitungsbahn in der Öffnung 18 eine Spirale mit konstanter Neigung darstellt, wird konstante Orientierung der Wärmefläche 11 nach der Bearbeitungsbahn sichergestellt. Auf diese Weise werden höchst optimale und stabile Betriebsarten bei der Laserstrahlbearbeitung gewährleistet, die eine konstante hohe Qualität der Laserstrahl-Bearbeitungszonen ergeben, wobei außerdem die Vielseitigkeit der Anwendung der Anlage inklusive den Bearbeitungsbereich der inneren Seitenflächen von Öffnungen erweitert wird.

Gewerbliche Anwendbarkeit

Mit der zum Patent angemeldeten Anlage können die Laserstrahl-Härtung, Schweißung, Legierung, das Schneiden u.a.m. an Bearbeitungsobjekten aus verschiedenen Werkstoffen durchgeführt werden, wobei in jedem Falle die erforderliche Zuführung der Laserenergie zu dem zu bearbeitenden Werkstoff erfolgt und die gewünschte Betriebsart realisiert wird. Die Laserstrahl-Bearbeitungszonen können sowohl an der Außenfläche als auch innerhalb von Öffnungen liegen, wobei die Konfiguration der Laserstrahl-Bearbeitungszonen praktisch beliebig sein kann. Somit kann eine einzelne zum Patent angemeldete Anlage mehrere eng spezialisierte Anlagen ersetzen, die Qualität der Erzeugnisse erhöhen, die Nomenklatur von bearbeitbaren Werkstoffen und Erzeugnissen erweitern, die Produktionskosten senken und die Effektivität der Produktion erhöhen.

Infolge ihrer großen Universalität stellt die
zum Patent angemeldete Anlage faktisch eine besondere
Art von Bearbeitungszentnen d.h. eine Laserstrahl-
Bearbeitungszentrum dar und kann im Bestand von fle-
xiblen Fertigungssystemen benutzt werden.

PATENTANSPRÜCHE

1. Anlage zur Laserstrahlbearbeitung von Werkstoffen, die einen Laser (1), einen Koordinatentisch (2) mit darauf angeordnetem zu bearbeitendem Werkstoff (3), ein im Gang des Laserstrahls (7) liegendes System (4) zur Umlenkung, Umformung und Fokussierung der Laserstrahlung mit einem Austrittstubus (6) enthält sowie mit einem an den Laser (1) und den Koordinatentisch (2) angeschlossenen System (8) zur numerischen Steuerung versehen ist, d a d u r c h   g e k e n n z e i c h - n e t ,   daß das System (4) zur Umlenkung, Umformung und Fokussierung der Laserstrahlung eine optische Spiegeleinheit (9) enthält, die mit ihrem eigenen Antrieb (10) ausgestattet ist, welcher ihre Drehung um ihre eigene Achse (16) ermöglicht und mit dem System (8) zur numerischen Steuerung verbunden ist.

2. Anlage nach Anspruch 1,   d a d u r c h   g e - k e n n z e i c h n e t ,   daß die optische Spiegeleinheit (9) in der Art eines Spiegels (12) ausgeführt ist, der mit einer Justiereinrichtung (13) Verbindung hat.

3. Anlage nach Ansprüchen 1,2, d a d u r c h g e k e n n z e i c h n e t ,   daß die optische Spiegeleinheit (9) in der Art eines Spiegels (12) ausgeführt ist, der mit einer Ablenkeinrichtung (14) versehen ist.

4. Anlage nach Anspruch 1,   d a d u r c h   g e - k e n n z e i c h n e t ,   daß die Achse (15) des Spiegels (12) der optischen Spiegeleinheit (9) unter einem Winkel zur eigenen Drehachse (16) der Spiegeleinheit (9) gerichtet ist.

5. Anlage nach Anspruch 1,   d a d u r c h   g e - k e n n z e i c h n e t ,   daß der Austrittstubus (6) des Systems (4) zur Umlenkung, Umformung und Fokussierung der Laserstrahlung mit einem unter einem Winkel zur Richtung des Laserstrahls (7) eingebauten Spiegel

0262225

(17) versehen und mit dem Antrieb (10) der optischen
Spiegeleinheit (9) verbunden ist, welcher die Möglichkeit der Drehbewegung des Austrittstubus (6) um eine
Achse gewährleistet, die mit der Achse des Laserstrahls
(7) zusammenfällt.

FIG.1

0262225

FIG.2

FIG.3

FIG.4

FIG.5

# INTERNATIONAL SEARCH REPORT

0262225

International Application No PCT/SU 86/00025

## I. CLASSIFICATION OF SUBJECT MATTER (if several classification symbols apply, indicate all) 6

According to International Patent Classification (IPC) or to both National Classification and IPC

IPC⁴   B 23 K 26/08

## II. FIELDS SEARCHED

### Minimum Documentation Searched 7

| Classification System | Classification Symbols |
|---|---|
| IPC⁴ | B 23 K 26/00, 26/08, 26/02<br>219-121 |

### Documentation Searched other than Minimum Documentation to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | US, A, 4480169, (John A. Macken), 30 October 1984 (30.10.84) &, DE, Al, 3332838 | 1 |
| | -- | |
| A | EP, A3, 0110231, (IVECO FIAT S.p.A.) 13 June 1984 (13.06.84) | 1 |
| | -- | |
| A | EP, A2, 0135851, (Siemens Aktiengesellschaft) 03 April 1985 (03.04.85), see the abstract and the drawing | 1 |

---------------

\* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 22 October 1986 (22.10.86) | 02 December 1986 (02.12.86) |
| International Searching Authority<br><br>ISA/SU | Signature of Authorized Officer |

Form PCT/ISA/210 (second sheet) (January 1985)